# EUROPEAN PATENT APPLICATION

(11) **EP 1 524 589 A1**
(43) Date of publication of application: **20.04.2005**
(21) Application number: 03292589.3
(22) Date of filing: 17.10.2003
(51) Int. Cl.: G06F 3/033

(54) **A method for providing a functionality set to a user, a device, a computer software product, a user interface network service, and a user interface therefor**

(71) Applicant: ALCATEL, 75008 Paris (FR)
(72) Inventor: Szabo, Peter, Dr., 75180 Pforzheim (DE); Rössler, Horst, 70794 Filderstadt (DE); Hoche, Michael, Dr., 71701 Schwieberdingen (DE); Neumaier, Armin, 70435 Stuttgart (DE)
(74) Representative: Rausch, Gabriele, Dr.

(57) **Abstract**

The invention relates to a method for providing a functionality set to a user (1) attempting to perform a task in a uniform way for multiple applications (3) by logging actions of the user, identifying a task from logged actions, and providing rendered help content or user guidance from a model (4') of clustered tasks (5') to the user (1), wherein the help content is related to the identified task, and the rendered help content comprises an operational description of said identified task and the further actions contained in the operational description completing the task are performed. The invention also relates to an corresponding device, a software product, user interface network service (7, 8), and a user interface (3, 2').

## Description

The present invention relates to a method for providing a functionality set to a user. The invention relates further to a corresponding device, a computer software product, a user interface network service, and a user interface.

Good user interfaces are essential for successful products, whether it is a web site, a cell phone, a personal digital assistant, or shrink-wrapped software.

User experience and interface design in the context of creating software represents an approach that puts the user, rather than the system, at the center of the development process. This philosophy, called user-centered design, incorporates user concerns and advocacy from the beginning of the design process and dictates the needs of the user should be foremost in any design decisions.

The model view controller (MVC) paradigm is a well known way of breaking an application, or even just a piece of an application's interface, into three parts: the model, the view, and the controller. MVC was originally developed to map the traditional input, processing, and output roles into the user interface realm.

There are guidelines and libraries for user interface design and a library of tools for building user interfaces, e.g. Components as described in the chapter "Overview of the Swing API" in the "The JFC Swing Tutorial: A Guide to Constructing GUIs", see http://java.sun.com/docs/books/tutorial/uiswing/index.html

Agents are known in the personal computer context, that is a software technology that enables a form of user interaction that can make using and learning to use a computer easier and more natural. There are desktop mates, animated human-like characters that live on a desktop as an interactive companion and assistant capable of speech and doing tasks for a user.

For the creation of such sophisticated user interfaces techniques, e.g. metaphors modalities, artificial intelligence etc. are required for describing the human interaction with the technical environments. On the one hand, there are computer scientists working on new user interface paradigms etc. on the other hand, there are cognitive scientists working on the technical analysis of human behavior.

This invention targets the problem of augmenting interfaces with cognition capabilities to assist users in their tasks.

Traditional Graphical User Interface (GUI) techniques forcing developers to use Windows, Icons, Menus, buttons, and pointing device, key boards etc. to interact. Many problems in machine interaction require understanding deeply how humans interact with and can exploit environments. Unlike classical user interfaces, much of the interaction is at the level of the information itself, rather than at the level of the device, and the semantic content of the information is very important.

A way out of this dilemma is provided by passive user assistance. Such a user assistance method is described in the US Patent Application No. 6,606,613. The disclosed methods analyze tasks performed by computer users by gathering usage information, converting logged usage into a uniform format, determining or defining task boundaries, and determining a task analysis model by clustering similar tasks together. The task analysis model is used to help users complete a task.

The goal of such user (task) modeling is to produce highly relevant information ecologies on a per user basis. Leveraging existing technologies in instrumentation, content analysis, linguistics, and task analysis, a user-modeling infrastructure is needed that tackles the challenging problems of modeling content consumption as well as sense-making tasks - in order to provide a contextual personalized informative application aware homogenous and simple user interface (beyond information retrieval) effectively, i.e. in a uniform way for multiple applications or devices.

This problem is solved by a method for providing a functionality set to a user attempting to perform a task, the method comprising steps of:
- logging actions of the user,
- identifying a task from logged actions, and
- providing rendered help content or user guidance from a model of clustered tasks (5, 5') to the user, wherein the help content is related to the identified task, such that said rendered help content comprises an operational description of said identified task, and
- performing further actions contained in the operational description completing the task.

The method might comprises the further step of asking the user for confirmation before performing the further actions. And the model of clustered tasks might be provided in a network, e.g. as a web service. The model of clustered tasks might be extended by:
- logging inputs of the user,
- identifying a task from the logged actions automatically or by interviewing the user, and
- extending the model by a description of said identified task, and
- integrating an operational description of said identified task derived from the logged actions.

The problem is solved inter alia by a user interface of a device or an application comprising output means for providing interaction feedback and controller means for user interaction input, the output means and the controller means are supported by an application model comprising a description of clustered tasks for rendering help content to a user or user guidance, by logging means for logging inputs of the user, and by identification means for identifying a task from logged inputs involving the application model, and by rendering means for providing a rendered help content or user guidance, where the rendered help content comprises operational description of an identified task and the controller means comprising interpreter means for performing further actions contained in the operational description completing the task.

In other words the invention is a rigorous applied intelligent, i.e. adaptive learning usage assistant providing a task oriented (implicit) user interface than rather an explicit imperative one in order to provide an efficient and effective usage of today's complex applications and devices that are often difficult and time consuming to understand.

Starting from systems providing different level of help provide mainly search facilities and navigation facilities on a hypertext or hypermedia bases. Automatic interaction help containing several interaction elements such as mouse movements and mouse clicks are evolved consequently which makes the time consuming reading of hypertext help documents dispensable. The system performs automatically the interactions simulating the actions of an experienced user that would carry out in order to fulfill a task.

Preferably an intelligent and interactive usage assistant provides interactive web centric or web based help for any kind of applications. The usage assistant has a learning capability that makes usage (real interaction) experience learned (from a experienced discovering user) within a network available to all users.

The intelligent usage assistant comprises roughly a dictionary for a set of supported applications. For each application there is a help description representing a set of known experience. The usage assistant comprises further an active interaction component enabling the usage assistant performing an implicitly requested and derived (completed) task. The set of experience could even be gathered from the whole user group of an application using networking and interaction recording techniques.

In contrast to a local help assistant the suggested usage assistant is capable to maintain the usage knowledge of especially future web applications which will comprise even more growing functionality as today's typical local applications.

Accordingly, it is an object and advantage of the present invention to provide a new class of know-how assisting (telecommunication) services "What to do when - service" stipulating experienced user interaction. The environment of an interactive and intelligent user agent might even replace the traditional user interface approach.

Another advantage of the present invention is that the know-how is gathered from a huge set of experience (of all users).

A further advantage of the present invention is that the device usage know-how (tricks) is made available and could even be commercialized.

Yet another advantage of the present invention is that the design, implementation and usage of user interfaces is simplified due to the generic approach. A generic user interface, e.g. a speech interface combined with an speech recognizer could learn to operate a video recorder (user interface) in combination with a television program web service using the experience of a "What to do when - service". Hence avoiding to read the manual of the video recorder for learning how to input show view numbers and the like.

Various cognitive models help characterize user behavior in information environments. One of the principal ways is via Information Foraging Theory, which provide an understanding of how strategies and technologies for information seeking, gathering, and consumption are adapted to the flux of information in the environment.

Scent-based Navigation and Information Foraging is for example a computational cognitive model developed to simulate users as they perform unfamiliar information-seeking tasks on the World Wide Web (WWW). It provides some automated cognitive engineering tools. It also serves as the basis for user models embedded in systems and devices to improve interaction, and it could serve as the basis for helping people to learn how to find, make sense of, and use information to improve solutions to significant everyday problems.

From the (text) editor field a large set of adaptive and guiding mechanisms are known, e.g. in the chapter "Learning by experience" as well as (natural) meaning interpretation in the chapter "Responding to Questions and Commands" of the textbook "Artificial Intelligence" of Patrick Winston, Addison Wesley, 1992.

In the problem context the US Patent No. 6,446,054 provides a fuzzy inference system or adaptive neuro-fuzzy inference system, and intelligent agent for the dynamic generation and retrieval of user interface software modules therefor.

The US Patent No. 5,877,759 discloses a user interface, embodies the technical potential of automation and delegation into a cohesive structure. The invention also provides intelligent assistance to the client user interface and provides an interface that is centered on autonomous processing of whole tasks rather than sequences of commands, as well as the autonomous detection of contexts which require the launch of a process. There an interface for user/agent interaction is disclosed comprising: a user interface element that offers a user intelligent choices of tasks that can be accomplished, based upon a given context and selection, wherein said tasks comprise multiple sub-tasks that are separately executed in conventional systems by calling up appropriate tools in a correct sequence. This interface element comprises a funnel into which a user can type and/or drop objects, wherein said funnel provides a decision overlay that operates upon user requests for actions or resources, where the order of execution of such requests may be simultaneous or sequential, and where sequential tasks may be randomly executed or they may be hierarchically executed, and wherein said user inherits all outside capability of an enterprise; and a pop-up menu that contains tasks and activities; wherein said interface element allows multiple ways to communicate a user request and wherein said interface element recognizes a current selection and objects dragged onto it, as well as text typed into it; and a meta agent that knows about the capabilities of a system and consolidates said capabilities of various plug-in agents into said interface element, wherein a funnel initiated search can be narrowed by user preferences, wherein said search may be time delimited; wherein said search may be performed in the background and a user may be alerted when said search is completed, and wherein said user can define any task-relevant parameter at said funnel, including any of time, context, and location.

Haystack is another tool designed to let every individual user manage all of his/her information in the way that makes the most sense to his/her. By removing the arbitrary barriers created by applications only handling certain information "types", and recording only a fixed set of relationships defined by the developer, Haystack aims to let users define whichever arrangements of, connections between, and views of information they find most effective. Such personalization of information management dramatically improves each individuals ability to find what they need when they need it.

The above three techniques support the integration of a uniform intelligent and adaptive user interface, according to the invention, which is described in detail using the following figures, where
Figure. 1 is a schematic drawing of a prior art model view control principle.
Figure. 2 is a schematic drawing of a prior art user interface with an added user assistant .
Figure. 3 is a schematic drawing of the components of the user interface according to the invention.
Figure. 4 is a schematic drawing of the components of the user interface according to the invention when the application model is (at least partially) provided in a network.
Figure. 5 is a schematic drawing of the components of the user interface according to the invention in terms of the model view controller concept.
Figure. 6 is a schematic drawing of the development process of a user interface according to the invention.

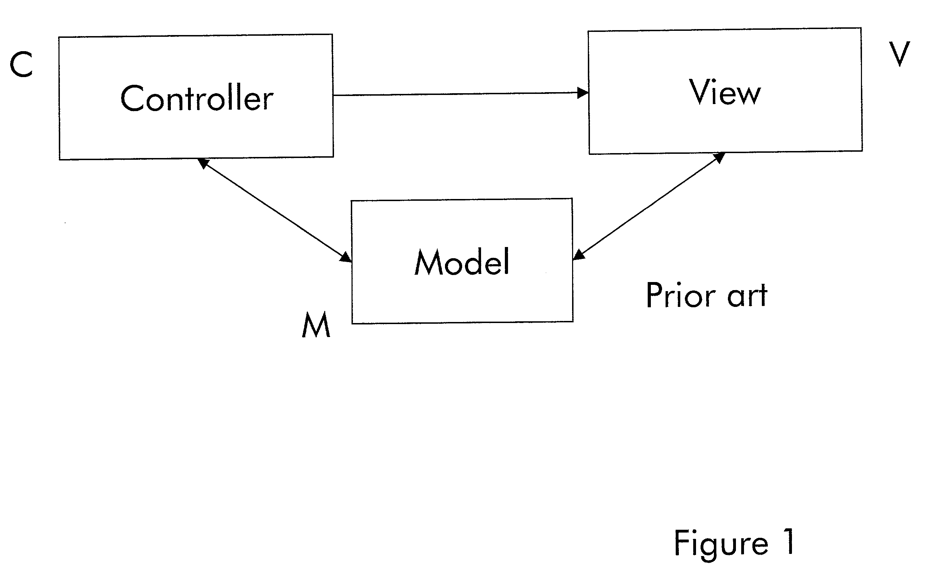

Figure. 1 shows the three logical entities of an arbitrary application, a (application) model M, a controller C, and a view V.

The user input, the modeling of the external world, and the visual feedback to the user are separated and handled by model M, view V, and controller C objects.

The controller C interprets inputs, e.g. mouse and keyboard from the user and maps these user actions into commands that are sent to the model M and/or view V to effect the appropriate state change. The model M manages one or more data elements, responds to queries about its state, and responds to instructions to change state. The view V manages e.g. a rectangular area of the display or in general the output reaction.

A model M encapsulates more than just data and functions that operate on it. A model M is meant to serve as a computational approximation or abstraction of some real world process or system. This includes even an existing application or device and its implemented features. It captures not only the state of a process or system, but how the system works. This enables to use real-world modeling techniques in defining models.

The view V is responsible for mapping outputs onto a device. A view V typically has a one to one correspondence with e.g. a display surface and knows how to render to it. Generally the view V provides feedback to a user in any modality, e.g. by audio (tone, speech, ...), by video (displays, lamps, ...) etc. A controller C is the means by which the user interacts with the application. A controller C accepts input from the user and instructs the model and view to perform actions based on that input. In effect, the controller C is responsible for mapping end-user action to application response. For example, if the user clicks a mouse button or chooses a menu item, presses a key sequence for entering a shell command, presses a button, moves a slider, checks a box, ... the controller C is responsible for determining how the application should respond by triggering the (application) model M and the view V.

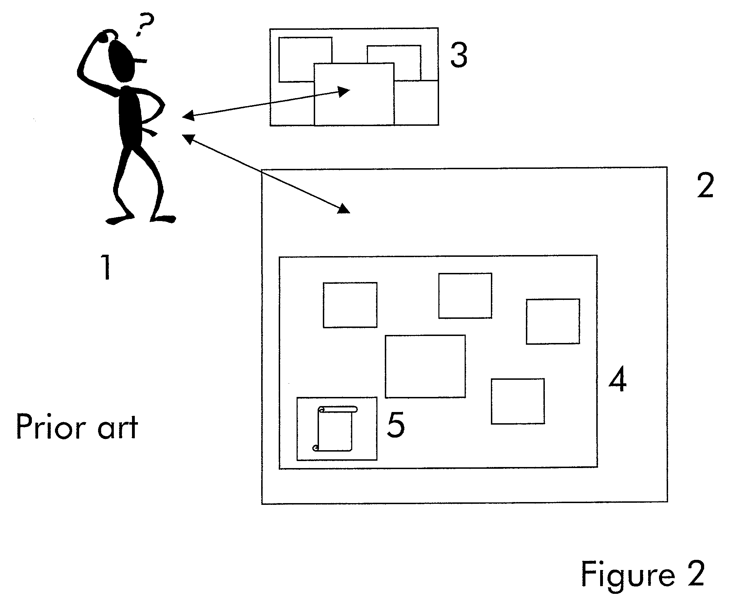

Figure. 2 shows a prior art user interface 3 with an added or attached user assistant 2 or help system. A user 1 that is not aware of a functionality of a device or application with the user interface 3, i.e. a user 3 which is not able to complete an intended task has to understand the user interface 3 and its functionality behind. In such a situation the user is deemed to consult an expert, e.g. a manual. The expert information is provided by the user assistant 2 comprising a catalog 4 of task descriptions 5. This principle is well known and was early implemented by the 'man' application in UNIX. Nowadays usually automatic retrievable and searchable hypertext documentation is provided by user assistants within a browser providing even context sensitive help information.

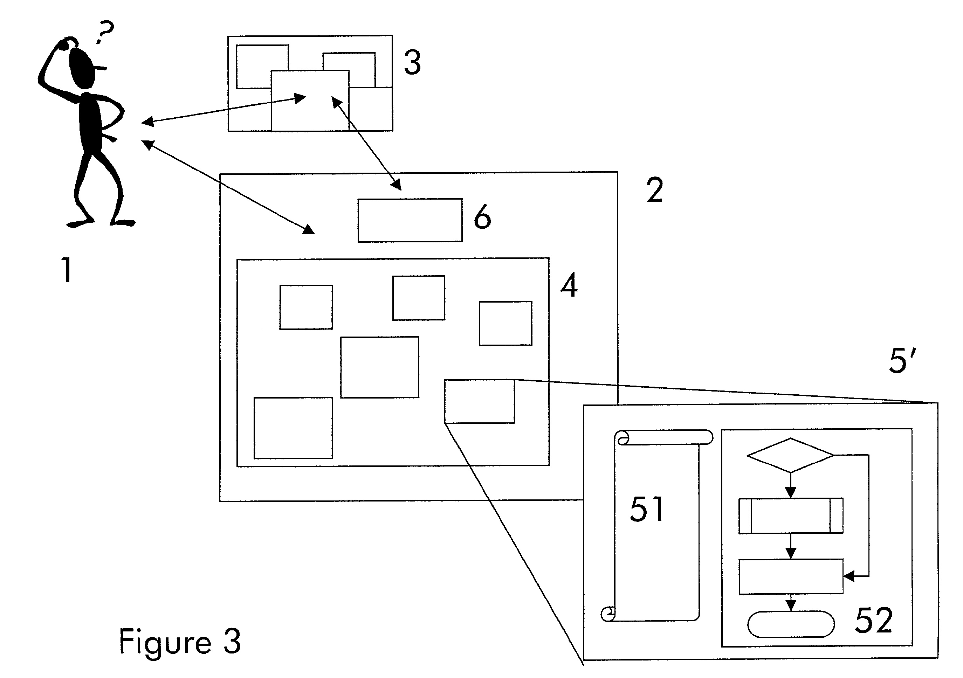

**Figure. 3** is a schematic drawing of the components of the user interface according to the invention. The user 1 interacts as usual with an user assistant 2 and an user interface 3 of some application or device. The difference between this figure and the figure above is that the user assistant 2 is now enhanced by an interpreter and interaction interface 6 to interpolate with the user interface 3 or the application behind.

An further enhancement of the usage assistant 2 is the operational description 51 that is bundled together with the help information 51 in a extended task descriptions 5'. The interpreter and interaction interface 6 stipulates the user interface by performing the operational description 51, which might be a recorded interaction script, a complex speech act between agents, or an interpreter driven application interface, etc.

Preferably the entities are realized as agents, i.e. as pro-active interacting intelligent and aware pieces of software. That means for instance that the knowledge is provided by an knowledge agent comprising extended task descriptions 5' that might be aggregated from equivalent knowledge agents. The user 2 is interviewed by an another agent that is able to match the semantically models of user 2 and knowledge agents. This agent might even simulate a user behavior in order to train the knowledge agent population. The interpreter and interaction interface 6 could also be used to to train the knowledge agent population. Approximately at the limit the agent system itself, i.e. the usage assistant 2 could take over the user interface functionality and the application or the device having the user interface 3 is controlled via the usage assistant 2, completely.

The advantageous effect is that in the limit case the usage assistant is a uniform personalized adaptive and intelligent user interface.

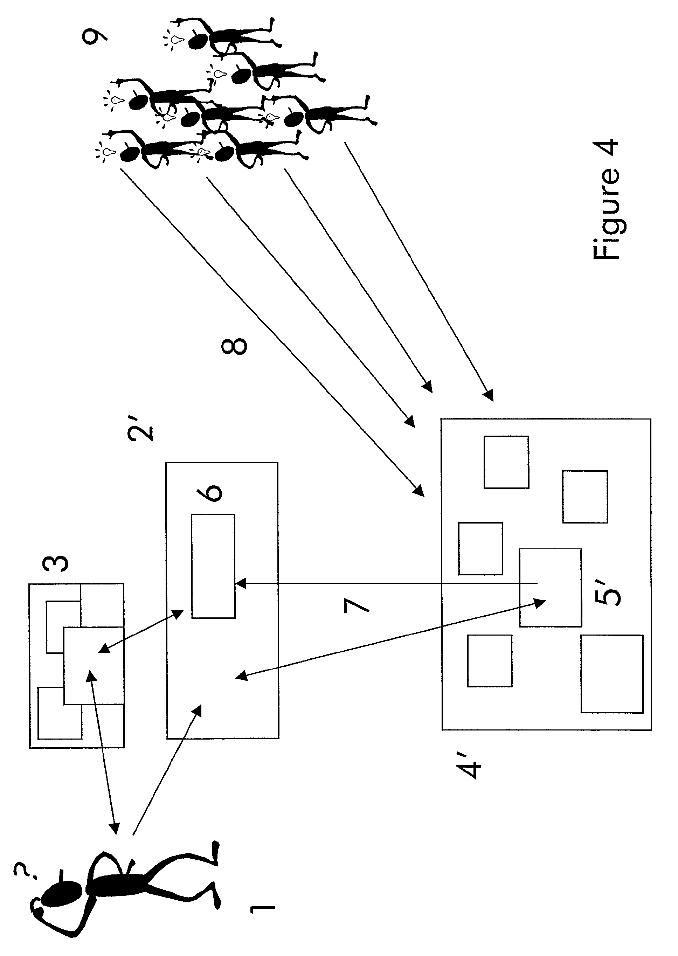

**Figure. 4** is a schematic drawing of an user agent 2' which is partially resided in a network. In the example the user agent human interface part 2' is located as the former described usage agent 2 at the user interface 3 and at the user 1, and comprises the interpreter and interaction interface 6. The network catalog 4' of task descriptions 5, i.e. the interface and task/usage know how is deployed in a network, e.g. as a web service or the like. Typically there is a huge set of users contributing (training) knowledge to the catalog by using, enhancing, and adding 8 task descriptions. The catalog of task descriptions could be invoked 7 via a networking mechanism, e.g. the aforementioned service, an distributed agent system, libraries, dictionaries, database or similar implementation concepts. For efficiency reasons it is advantageous to reside i.e. cash some knowledge at the user agent 2'.

The figure illustrates how dynamically the user know how is aggregated into an expert system and made available to enhanced (uniform) user interfaces.

Also in the distributed case the knowledge base could be implemented using agent technology and the effects and the communication between experts and novices, i.e. users with different skills, could be simulated and aggregated into the knowledge base applying e.g. the above cited adaptive learning methods.

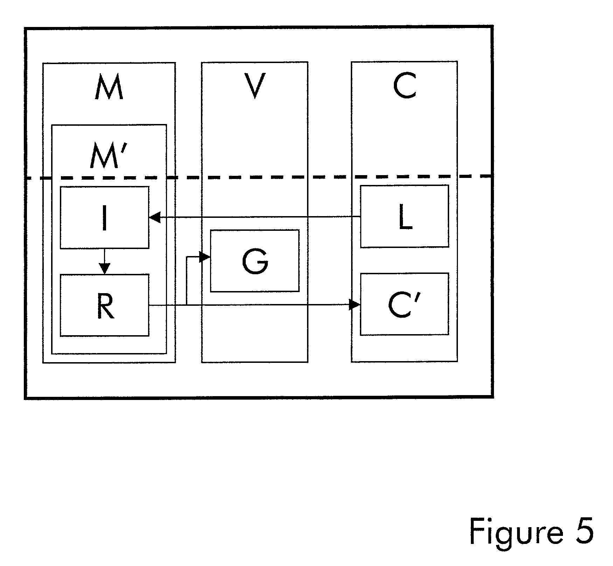

Figure. 5 provides a closer look at the components of the user interface according to the invention in terms of the model M, view V, controller C concept. The above described usage assistant 2 or 2' extend this concept by an application model M', which comprises the necessary information for enabling the usage assistant to interact with the real user interface 3 or the application behind. For a video recorder this might be a semantics description of each interaction element, e.g. buttons and there functionality, the states of the application e.g. tape inserted, playing, ... and so on. The control C is extended by a logging facility L that is able to observe user interaction with the user interface. The logged information are interpreted with respect to the application model and a user model in order do identify a task. An identification component I derived an approximation of the user intends to do from the knowledge what he or she or somebody else had already earlier done. This knowledge could also be trained using self organizing adaptive mechanisms like agent populations or neuronal networks. The a rendering engine R for completing the tasks derives the necessary atomic actions for stipulating the controls by the interface C' in order to drive the controller appropriately for completing the task. In parallel the user is informed using an additional view component G providing the rendered information about the task, i.e. help content or user guidance.

The horizontal dashed line shows how the additional components provide a uniform interface with an abstract application model M'. The shown components allow to introduce an user model where the control elements are simple and uniform like the above mentioned funnel for any kind of application or device.

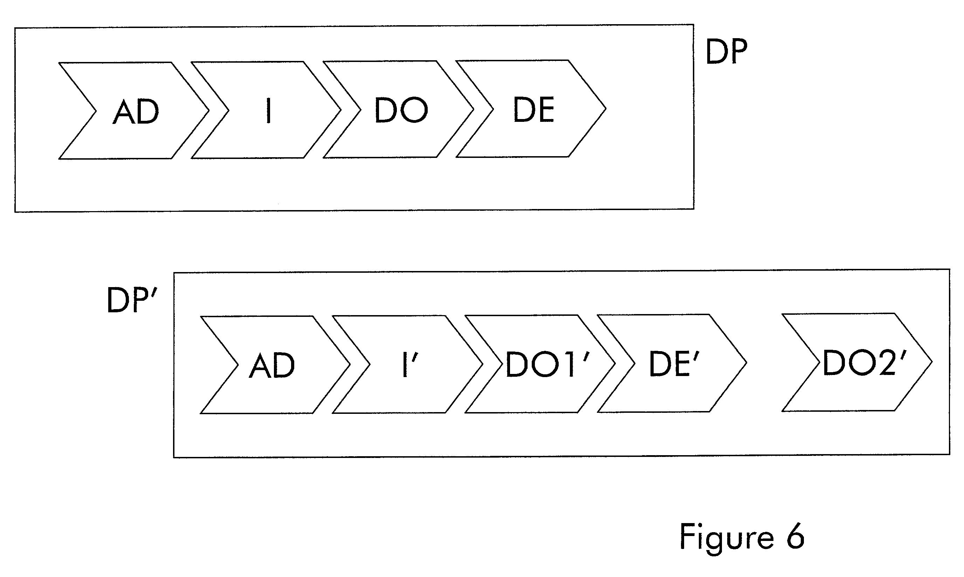

Figure. 6 illustrated the changes in an development process.

In an former development process DP analysis and design AD provides a basis for implementation I. Then the result is documented DO and deployed - together with the finished user interface. The new development process DP' differs. The new implementation does not require to put sophisticated thoughts into the user interface design and the components for interaction. It focuses on the real functionality in order to provide a simple and complete application model. This application model is documented in an initial documentation phase DO1'. All basic tasks are for instance described and the constraints for composition of tasks. Then the result is (incomplete) deployed DE'. While in an operational phase the documentation and the task knowledge is enhanced in an additional phase D02' by user or self experience and knowledge aggregation.

The usage agent itself could offer adaptively different controls by such adaptation, e.g. providing menus with the most often used tasks, shortcuts, or even by adaptation of the interaction modalities which is enabled by the uniformity of the usage assistant 2.

Thus the extended model-view-control approach in combination with adaptive knowledge aggregation about user interaction and the web centric deployment and aggregation of the knowledge allows to simplify the development of user interfaces and the usage for users.

This is illustrated by a simple use case where a user of a Internet browser would like to configure the default home page. Instead of
- seeking the default home page of "Alcatel" and
- retrieving the uniform resource identifier "www.alcatel.com",
- visiting the site using e.g. "Netscape 7",
- followed by a selection of "preferences" in the "edit" pull down menu,
- clicking in the category "Navigator" and finally on the button "use current page" in the "home page section",
the user interface according to the invention provides this knowledge since this task was done by a million of users and therefor already part of the knowledge which enables the following scenario:
- a user requires "set homepage to Alcatel"
- the task is identified and the corresponding actions are performed.

The exceptional feature is that a user does not need to understand the machine's model or the application's model because his understanding of the task is shared by a large set of similar users whereas the knowledge is supported by a small set of experienced users. Instead he could instruct, direct, or communicate in an intentional rather than an extensional mode.

A further feature is that multiple applications are triggered by a uniform user interface. It is even suggested to install certain applications when they are needed to perform a task

## Claims

1. A method for providing a functionality set to a user (1) attempting to perform a task, the method comprising steps of:
- logging actions of the user,
- identifying a task from logged actions, and
- providing rendered help content (51) or user guidance (51) from a model (4, 4') of clustered tasks (5, 5') to the user, wherein the help content (51) is related to the identified task,
**characterized in that** said rendered help content comprises an operational description (52) of said identified task and the method comprising the further step of
- performing further actions (52) contained in the operational description completing the task.

2. The method according to claim 1, **characterized in that** the method comprises the further step of asking the user (1) for confirmation before performing the further actions.

3. The method according to claim 1, comprising the further steps for extending the model (4, 4') of clustered tasks (5, 5'):
- logging inputs of the user (1),
- identifying a task from the logged actions automatically or by interviewing the user (1), and
- extending the model (4, 4') by a description of said identified task and integrating an operational description (52) of said identified task derived from the logged actions.

4. The method according to claim 1, **characterized in that** the model (4, 4') of clustered tasks (5, 5') is provided in a network and the steps of identifying a task from logged inputs or providing a rendered help content or user guidance comprising a step of accessing the model (4') of clustered tasks (5, 5').

5. A user interface of a device or an application comprising output means for providing interaction feedback and controller means for user interaction input, the output means and the controller means are supported by an application model (4, 4', M') comprising a description of clustered tasks (5, 5') for rendering help content or user guidance to a user (1), by logging means (L) for logging inputs of the user (1), and by identification means (I) for identifying a task from logged inputs involving the application model (M, M'), and by rendering means (R) for providing a rendered help content or user guidance, **characterized in that** said rendered help content comprises operational description (52) of an identified task (5, 5') and the controller means (C) comprising interpreter means (C', 6) for performing further actions contained in the operational description (52) completing the task.

6. The user interface according to claim 6, **characterized in that** the user interface comprising further control means (C') for personalizing the controller means (C) by defining user preferences and user characteristics.

7. The user interface according to claim 6, **characterized in that** the controller means (C) comprises further interaction means for user confirmation before performing the further actions.

8. The user interface according to claim 6, **characterized in that** the user interface is adapted by extensions and restrictions of controller means (C) and the semantics of the controller means in accordance with identified tasks.

9. The user interface according to claim 6, **characterized in that** the application model (M', 4, 4') is at least partially provided in a network, e.g. by a user interface service, and the user interface comprises further communication means (7, 8) for retrieving and deploying said help content or user guidance.

10. A user interface network service providing an application model (M', 4') for a user interface according to claim 5.

11. A computer software product, **characterized by** comprising programming means for realizing the method according to claim 1.

12. A device, **characterized by** comprising a user interface according to claim 6.
